# EUROPÄISCHE PATENTSCHRIFT

(11) **EP 1 524 443 B1**
(45) Veröffentlichungstag und Bekanntmachung des Hinweises auf die Patenterteilung: **03.09.2008**
(21) Anmeldenummer: 04450181.5
(22) Anmeldetag: 28.09.2004
(51) Int. Cl.: F16D 3/76

(54) **Drehelastische Kupplung**
Torsionally elastic coupling
Accouplement torsio-élastique

(30) Priorität: 16.10.2003 AT 16302003
(43) Veröffentlichungstag der Anmeldung: 20.04.2005
(73) Patentinhaber: Geislinger GmbH, 5300 Hallwang (AT)
(72) Erfinder: Geislinger, Matthias, Dipl.-Ing., 5026 Salzburg (AT); Müller, Michael, Dipl.-Ing., 83395 Freilassing (DE); Sigle, Christof, Ing.Dr., 5300 Hallwang (AT)
(74) Vertreter: Hübscher, Helmut

(56) Entgegenhaltungen:
- AT-B- 407 664

## Beschreibung

Die Erfindung bezieht sich auf eine drehelastische Kupplung mit einem Außenkranz, mit einer Nabe und mit einem elastomeren Ringkörper zwischen Außenkranz und Nabe.

Drehelastische Kupplungen, die aus einem einerseits mit einer Nabe und anderseits mit einem Außenkranz schubfest verbundenen, elastomeren Ringkörper aufgebaut sind, bieten den Vorteil einer einfachen Konstruktion, doch ist ihr Einsatzgebiet beschränkt. Da der zulässige Verdrehwinkel zwischen Nabe und Außenkranz vor allem durch die radiale Erstreckung des elastomeren Ringkörpers bestimmt wird und im allgemeinen der Durchmesser des Außenkranzes vorgegeben ist, kann zur Vergrößerung des zulässigen Drehwinkels lediglich der Nabendurchmesser verkleinert werden, was jedoch zu einer Verringerung der Anbindungsfläche zwischen Nabe und elastomerem Ringkörper und damit zu einer Verminderung des übertragbaren Drehmomentes führt. Die sich zur Vergrößerung der Anbindungfläche anbietende Möglichkeit, die axiale Erstreckung des Ringkörpers zumindest im Anbindungsbereich zu vergrößern, verbietet sich im allgemeinen, weil mit der Vergrößerung der axialen Erstreckung des elastomeren Ringkörpers nicht nur die axiale Baulänge der Kupplung steigt, sondern auch deren Wärmebelastung aufgrund der sich verschlechternden Bedingungen hinsichtlich der Wärmeabfuhr aus dem Ringkörper.

Zur Übertragung größerer Drehmomente bei einem vergleichsweise geringen Bauvolumen ist es bereits bekannt (AT 407 664 B), bei einer elastischen Drehkupplung zwischen der Nabe und dem Außenkranz einen ringartigen Verbundkörper vorzusehen, der spiralartig verlaufende Schichten eines Elastomers aufweist, wobei die Windungen dieser spiralartigen Schichten mit einer die Zwischenräume zwischen den Windungen ausfüllenden, zugelastischen, biegsamen Zwischenschicht aus einem faserverstärkten Kunststoff schubfest verbunden sind, deren Zug- und Schubelastizität kleiner als die der elastomeren Schichten ist. Zufolge dieser Maßnahme werden die Umfangskräfte zum Großteil über diese Zwischenschicht übertragen, so daß die elastomeren Schichten entlastet werden und die Kupplung ein erheblich größeres Drehmoment bei gleichem Bauvolumen wie bei elastomeren Ringkörpern übertragen kann. Der zulässige Verdrehwinkel zwischen Nabe und Außenkranz wird durch den Verbundkörper im Vergleich zu einem elastomeren Ringkörper allerdings nicht vergrößert.

Der Erfindung liegt somit die Aufgabe zugrunde, eine drehelastische Kupplung der eingangs geschilderten Art so auszugestalten, daß der Verdrehwinkel zwischen Nabe und Außenkranz erheblich vergrößert werden kann, ohne eine entsprechende Verringerung des übertragbaren Drehmomentes in Kauf nehmen zu müssen.

Die Erfindung löst die gestellte Aufgabe dadurch, daß der elastomere Ringkörper nabenseitig mit einer faserverstärkten Kunststoffhülse schubfest verbunden ist, die über den Umfang verteilte, im Ringkörper eingebettete, spiralförmig verlaufende Anschlußstege aufweist.

Durch die über den Umfang verteilten, spiralförmig verlaufenden Anschlußstege der faserverstärkten Kunststoffhülse wird die Anbindungsfläche zwischen dem elastomeren Ringkörper und der faserverstärkten Kunststoffhülse vergrößert, so daß die zur Übertragung eines vorgegebenen Drehmomentes erforderliche Anbindungsfläche ohne weiteres auch bei kleineren Nabendurchmessern erreicht werden kann. Dies bedeutet, daß die radiale Erstreckung des elastomeren Ringkörpers bei gleichbleibendem Durchmesser des Außenkranzes ohne nachteilige Verringerung des übertragbaren Drehmomentes vergrößert werden kann, was sich unmittelbar auf den Verdrehwinkel zwischen Nabe und Außenkranz auswirkt. Die spiralförmig verlaufenden Anschlußstege der Kunststoffhülse, die einander vorzugsweise in Umfangsrichtung überlappen, behindern die Drehelastizität der Kupplung kaum, weil sie sich einerseits nur über einen radialen Abschnitt des Ringkörpers erstrecken und anderseits ausreichend biegeweich sind, um zwischen ihnen eine elastische Verformung der elastomeren Ringkörperbereiche zuzulassen, die sich zwischen den einander überlappenden Anschlußstegen befinden.

Eine zusätzliche Maßnahme, den zulässigen Verdrehwinkel zwischen Nabe und Außenkranz der drehelastischen Kupplung zu vergrößern, besteht darin, die Kunststoffhülse mit der Nabe nicht formschlüssig, sondern kraftschlüssig zu verbinden, um eine das übertragbare größte Drehmoment begrenzende Rutschkupplung zu erhalten. Da durch die Ausbildung einer Rutschkupplung zwischen Kunststoffhülse und Nabe der drehelastischen Kupplung Drehmomentspitzen abgefangen werden, kann die drehelastische Kupplung kleiner und damit drehweicher gestaltet werden, was zur angestrebten Vergrößerung des zulässigen Verdrehwinkels führt.

In der Zeichnung ist der Erfindungsgegenstand beispielsweise dargestellt.
Es zeigen
- Fig. 1: eine erfindungsgemäße drehelastische Kupplung in einem schematischen achsnormalen Schnitt und
- Fig. 2: diese Kupplung in einem Schnitt nach der Linie II-II der Fig. 1.

Die drehelastische Kupplung gemäß dem dargestellten Ausführungsbeispiel weist eine Nabe 1 und einen Außenkranz 2 auf, zwischen dem und der Nabe 1 ein elastomerer Ringkörper 3 vorgesehen ist. Dieser mit dem Außenkranz 2 schubfest verbundene Ringkörper 3 ist nabenseitig mit einer faserverstärkten Kunststoffhülse 4 schubfest verbunden, die spiralförmig verlaufende, über den Umfang verteilte Anschlußstege 5 bildet. Diese sich nur über einen radialen Abschnitt des Ringkörpers 3 erstreckenden, einander in Umfangsrichtung überlappenden Anschlußstege 5 sind in den Ringkörper 3 eingebettet und bilden eine vergrößerte Anbindungsfläche zwischen dem Ringkörper 3 und der Kunststoffhülse 4, so daß auch bei einem vergleichsweise kleinen Durchmesser der Kunststoffhülse 4 eine ausreichende Anbindungsfläche zur Übertragung von entsprechenden Drehmomenten zur Verfügung steht.

Obwohl die faserverstärkte Kunststoffhülse 4 die Nabe selbst bilden oder formschlüssig mit der Nabe 1 verbunden werden kann, ergeben sich besonders vorteilhafte Konstruktionsbedingungen, wenn die faserverstärkte Kunststoffhülse 4 kraftschlüssig mit der Nabe 1 in Verbindung steht, so daß sich zwischen der Nabe 1 und der Kunststoffhülse 4 eine das maximal übertragbare Drehmoment begrenzende Rutschkupplung ergibt. Die dadurch mögliche Begrenzung von Drehmomentspitzen erlaubt eine geringere Baugröße für die drehelastische Kupplung, die somit drehweicher ausgeführt werden kann, ohne eine Überlastung beim Auftreten von Drehmomentspitzen befürchten zu müssen.

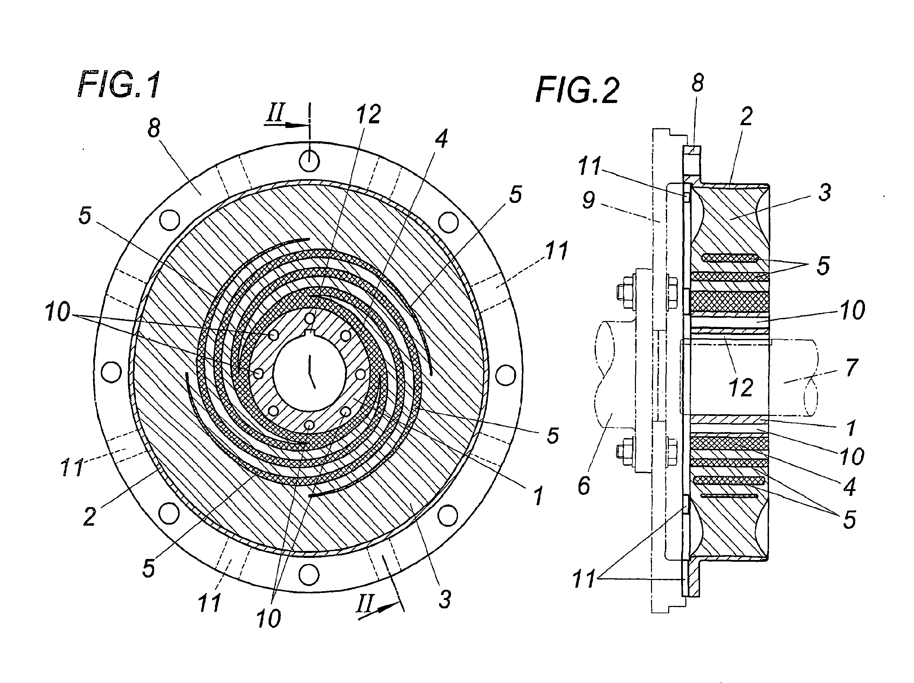

Die dargestellte Drehmomentkupplung kann in herkömmlicher Weise in einem Antriebsstrang eingebaut werden, der in der Fig. 2 durch die Wellen 6, 7 strichpunktiert angedeutet ist. Während die drehelastische Kupplung mit der Nabe 1 auf der Welle 7, beispielsweise der Eingangswelle eines Getriebes oder eines Generators, drehfest sitzt, ist der Außenkranz 2 über einen Ringflansch 8 mit einem Anschlußflansch 9 der Welle 6 verschraubt. Dieser Anschlußflansch 9 behindert die Belüftung des Ringkörpers 3 auf der der Welle 6 zugekehrten Stirnseite. Um die Wärmeabfuhr aus dem elastomeren Ringkörper 3 über diese Stirnseite zu verbessern, können in der Nabe 1 entsprechende Durchtrittsöffnungen 10 vorgesehen sein. Über die Belüftung durch diese axialen Durchtrittsöffnungen 10 sowie mit diesen Durchtrittsöffnungen 10 zusammenwirkenden Aussparungen 11 im Bereich des Ringflansches 8 wird nicht nur die Abfuhr der im elastomeren Ringkörper 3 bei der Dämpfung von Drehschwingungen entstehenden Wärme, sondern selbstverständlich auch die Abfuhr der Reibungswärme der Rutschkupplung zwischen der Nabe 1 und der Kunststoffhülse 4 erleichtert.

Die drehfeste Verbindung zwischen der Nabe 1 und der Welle 7 kann beispielsweise über eine Paßfeder erfolgen. Die Paßfedernut in der Nabe 1 ist mit 12 bezeichnet. Es ist aber auch jede andere drehfeste Verbindung möglich.

## Patentansprüche

1. Drehelastische Kupplung mit einem Außenkranz (2), mit einer Nabe (1) und mit einem elastomeren Ringkörper (3) zwischen Außenkranz (2) und Nabe (1), wobei der elastomere Ringkörper (3) nabenseitig mit einer faserverstärkten Kunststoffhülse (4) schubfest verbunden ist, die über den Umfang verteilte, im Ringkörper (3) eingebettete, spiralförmig verlaufende Anschlußstege (5) aufweist.

2. Kupplung nach Anspruch 1, **dadurch gekennzeichnet, daß** die spiralförmig verlaufenden Anschlußstege (5) einander in Umfangsrichtung überlappen.

3. Kupplung nach Anspruch 1 oder 2, **dadurch gekennzeichnet, daß** die Kunststoffhülse (4) mit der Nabe (1) eine das übertragbare größte Drehmoment begrenzende Rutschkupplung bildet.

## Claims

1. Torsionally flexible clutch having an outer rim (2), having a hub (1) and having an elastomer annular body (3) between the outer rim (2) and the hub (1), wherein on the hub-side the elastomer annular body (3) is connected to a fibre-reinforced synthetic material sleeve (4) in a shear-resistant manner, which sleeve comprises connecting webs (5) which are distributed over the periphery, are embedded in the annular body (3) and extend in a spiral-like manner.

2. Clutch as claimed in Claim 1, **characterised in that** the connecting webs (5) extending in a spiral-like manner overlap each other in the peripheral direction.

3. Clutch as claimed in Claim 1 or 2, **characterised in that** the synthetic material sleeve (4) forms with the hub (1) a slip clutch limiting the maximum transferable torque.

## Revendications

1. Accouplement torsio-élastique, avec une couronne extérieure (2), avec un moyeu (1) et avec un corps annulaire (3) élastomère, entre la couronne extérieure (2) et le moyeu (1), le corps annulaire (3) élastomère étant relié, rigidement en coulissement, côté moyeu, à une douille en matière synthétique (4), renforcée par des fibres, présentant des nervures de raccordement (5) s'étendant en forme de spirale, intégrées dans le corps annulaire (3), réparties sur la périphérie.

2. Accouplement selon la revendication 1, **caractérisé en ce que** les nervures de raccordement (5) s'étendant en forme de spirale se chevauchent les unes les autres en direction périphérique.

3. Accouplement selon la revendication 1 ou 2, **caractérisé en ce que** la douille en matière synthétique (4) forme, avec le moyeu (1), un accouplement à glissement, limitant le couple de rotation maximal transmissible.
